# EUROPÄISCHE PATENTSCHRIFT

(11) **EP 0 440 025 B1**
(45) Veröffentlichungstag und Bekanntmachung des Hinweises auf die Patenterteilung: **03.08.1994**
(21) Anmeldenummer: 91100219.4
(22) Anmeldetag: 09.01.1991
(51) Int. Cl.: D01H 4/42, D01H 1/32

(54) **Antriebseinrichtung einer OE-Spinnmaschine**
Device for driving an open end spinning machine
Dispositif d'entraînement d'une machine à filer à bout libre

(30) Priorität: 27.01.1990 DE 4002422; 06.12.1990 DE 4038881
(43) Veröffentlichungstag der Anmeldung: 07.08.1991
(73) Patentinhaber: Rieter Ingolstadt Spinnereimaschinenbau AG, 85055 Ingolstadt (DE)
(72) Erfinder: Adolf, Hermann, W-8070 Ingolstadt (DE); Richard, Karl-Heinz, W-7352 Boll (DE); Jaeger, Wolfgang, W-7320 Göppingen (DE)

(56) Entgegenhaltungen:
- EP-A- 0 155 472
- DE-A- 2 643 625
- DE-A- 2 753 924
- DE-A- 3 412 060
- DE-B- 1 280 376

## Beschreibung

Die Erfindung betrifft eine Antriebseinrichtung einer Offenend-Spinnmaschine gemäß Oberbegriff des Anspruchs 1. Die Offenend-Spinnmaschine wird nachfolgend kurz OE-Spinnmaschine genannt.

Die Erfindung bezieht sich dabei auf eine Antriebseinrichtung, die den Antrieb aller Spinnstellen der OE-Spinnmaschine oder einer Spinnstellengruppe mit einer Vielzahl von Spinnstellen dieser Spinnmaschine bedienen kann. Und zwar haben im allgemeinen solche OE-Spinnmaschinen an beiden Maschinenlängsseiten je eine Reihe von Spinnstellen und man kann dann entweder vorsehen, beide Reihen von Spinnstellen durch dieselbe Antriebseinrichtung anzutreiben oder beide Reihen von Spinnstellen oder einer sonstigen Mehrzahl von Gruppen von Spinnstellen je eine eigene Antriebseinrichtung zuzuordnen.

Bei der OE-Spinnmaschine kann es sich sowohl um eine Rotorspinnmaschine, als auch um eine Friktions-Spinnmaschine handeln. Bei solchen OE-Spinnmaschinen werden Faserbänder von Speisewalzen zu Zieh- und Einzelfasern auflösenden Auflösewalzen transportiert und von diesen werden die hierdurch erhaltenen Einzelfasern zu Fasersammel- und Drallerzeugungsorganen gefördert, nämlich im Falle einer Rotor-Spinnmaschine zu Spinnrotoren und bei einer Friktion-Spinnmaschine in eine durch zwei gleichsinnig angetriebene Walzen gebildete Rinne, in der sie zum Faserband gedreht werden. Die durch die in den Spinnrotoren bzw. an den Friktionswalzen gesammelten Fasern werden zu Garnen gedreht und jedes Garn wird durch ein Abzugswalzenpaar kontinuierlich abgezogen und zu einer Kreuzspule aufgewunden, die durch eine Spulenwalze umfangsseitig angetrieben wird.

Die Verzugshöhe ist bei solchen OE-Spinnmaschinen durch das Verhältnis der Abzugsgeschwindigkeit, mit der das betreffende Garn durch das Abzugswalzenpaar gefördert wird, und der Geschwindigkeit, mit der die Speisewalze das in Einzelfasern aufzulösende Faserband zur Auflösewalze transportiert, bestimmt. Es ist erwünscht, die Verzugshöhe im normalen Betrieb konstant zu halten. Bisher ging man hierzu bei den üblichen OE-Spinnmaschinen so vor, daß die anzutreibenden Organe ihrer Spinnstellen mit Ausnahme der Auflösewalzen durch einen ihnen gemeinsamen Hauptmotor über mechanische Getriebe darunter auch Zahnradwechselgetriebe angetrieben wurden.
Diesen Nachteil beseitigte die DE-PS 27 53 924, da sie für einzelne Arbeitsorgansorten Einzelantriebe einsetzte und ein konstantes Drehzahlverhältnis zwischen den Arbeitsorgansorten einstellte.
Die DE-PS 27 53 924 hat die Aufgabe eine Antriebseinrichtung zu schaffen, bei der die Beibehaltung erwünschter, exakter Arbeitsgeschwindigkeitsverhältnisse zwischen den betreffenden Arbeitsorganen unter Wegfall bisher benötigter Getriebe mit vielstufigen, feinstufig verstellbaren Übersetzungsverhältnissen beim Anlauf und/oder Auslauf als auch beim Betrieb möglich ist, um so insbesondere den baulichen und wirtschaftlichen Aufwand beträchtlich zu verringern. Die Aufgabe wird dadurch gelöst, daß ein statisch, digitaler Frequenzumsetzer eingesetzt wird, der vielstufig und feinstufig verstellbar ist. Der Einsatz des statischen, digitalen Frequenzumsetzers erfolgt derart, daß dessen Eingangsfrequenz durch einen am Führungsmotor mitlaufenden Taktgeber bestimmt wird. Der statisch, digitale Frequenzumsetzer führt auf Grund der vom Führungsmotor vorgegebenen Drehzahl einen nachfolgenden Motor im eingestellten Drehzahlverhältnis. Durch diese Antriebsvorrichtung wird erreicht, daß das eingestellte Drehzahlverhältnis zwischen zwei Motoren konstant bleibt. Dieses Drehzahlverhältnis ist vielstufig und feinstufig verstellbar.
Die Antriebsvorrichtung hat jedoch den Nachteil, daß eine Abweichung der eingestellten Führungsgrößen nicht kontrollierbar ist. In der Praxis macht sich stets eine zusätzliche Schaltung zur Überwachung der Führungsgrößen erforderlich.
Nach der Technologie des OE-Spinnens ist es nicht erforderlich, den Anfahrtprozess der beiden Motoren absolut synchron zu beginnen. Insofern betreibt die DE-PS 27 53 924 einen Aufwand, der beim OE-Spinnen im Anfahrprozess nicht erforderlich ist. Das betrifft den energetischen Aufwand zum synchronen Beschleunigen von Trägheitsmassen der Spinnmaschine bis auf Nenndrehzahlen. Beim Anfahren der Spinnmaschine aus dem Stillstand braucht dieses Drehzahlverhältnis nicht konstant zu sein, desgleichen nicht beim Ausfahren oder Auslaufen dieser Spinnmaschine in den Stillstand, da man die während des Anfahrens der Spinnmaschine aus dem Stillstand und während ihres Auslaufens in den Stillstand gesponnenen Garnstücke von den übrigen gesponnenen Garnen abtrennen kann.

Der Fall liegt dagegen anders, wenn während des normalen Betriebs der Spinnmaschine bzw. ihrer betreffenden Spinnstellengruppe ein kurzzeitiger Netzausfall von höchstens ein bis zwei Sekunden auftritt, da sich dann, falls sich das Drehzahlverhältnis der Speisewalzen zu den Abzugswalzen nicht unerheblich ändern sollte, in den Garnen in nicht mehr auffindbarer Weise viel zu dünne oder viel zu dicke Garnlängen einstellen könnten.

Neben diesem technologischen Aspekt ist zu beachten, daß bei der Antriebseinrichtung die Abzugswalzen durch einen anderen Motor (Asynchronmotor) als die Speisewalzen (mittels Synchronmotor) angetrieben werden. In diesem Fall können sich bei einer Netzunterbrechung ihre Drehzahlen so unterschiedlich ändern, daß sich ihr Drehzahlverhältnis mehr oder weniger stark ändert. Dies kann zwar in manchen Fällen in Kauf genommen werden, doch ist es besser und in vielen Fällen notwendig, daß auch während den erwähnten kurzzeitigen Netzunterbrechungen, die nicht zum Stillstand der Spinnstelle führen, die jeweils eingestellten Drehzahlverhältnisse der beiden Motoren für die Speisewalze und die Antriebswalzen sich nicht oder höchstens unwesentlich ändern.

Es ist deshalb die Antriebsvorrichtung für den Antrieb der Abzugs- und Speisewalze so ausgebildet, daß bei einem kurzzeitigen Netzausfall das vorgegebene Drehzahlverhältnis nicht oder nur unwesentlich geändert wird. Dies erfolgt durch in die Gleichstromzwischenkreise zwischengeschaltete Pufferkondensatoren (vergleiche DE-OS 26 43 625, Seite 6, 1. Absatz). Die in ihnen bei normalen Betrieb der Motoren gespeicherte elektrische Ladung ist so groß, daß sie während eines erwähnten kurzzeitigen Ausfalls des Netzes die Motoren über die Wechselrichter noch ausreichend mit Speiseströmen versorgen können, so daß die Motoren ihr Drehzahlverhältnis nicht ändern. Dabei kann es durchaus in Kauf genommen werden, daß ihre Drehzahlen während dieses kurzzeitigen Netzausfalls je nach Größe des Speisestroms des Asynchronmotors zwar etwas abfallen, wobei jedoch die Drehzahl des Synchronmotors so nachgeführt wird, daß das Drehzahlverhältnis geführt wird, und daß das Drehzahlverhältnis dieser beiden Motoren weiterhin dem Verhältnis n1/n2 entspricht.

Die schaltungstechnische Vielfalt der Steuerung und Regelung von Antrieben im allgemeinen wie beispielsweise die Bildung des Impulsmusters zur Ansteuerung der Leistungshalbleiter oder Störmeldungen unter Einsatz von Mikroprozessoren (Rosch, P.F., Mikroprozessor-gesteuerte Frequenzumrichter, Technika, 12/1988, S. 13-17) erläutert, wobei zum Ausdruck kommt, daß der Einsatz von Drehstrommaschinen besondere Anforderungen an die Regelung stellt, ohne das für den besonderen Fall des extremen, kurzzeitigen Netzausfalls Lösungshinweise ableitbar wären.

Die bekannten Lösungen (wie die Publikation Meier, Urs.: Mehrmotorenantriebe. in: STZ, Nr. 11, 1.6.88, S. 8-10 oder DE 25 21 940 C2, DE 26 43 625 A1, DE 27 53 924 A1) enthalten keine Ansätze, um entsprechend der erfindungsgemäßen Aufgabenstellung handeln zu können. Die Lösung nach DE 33 47 113 C2 ist auf die Bewältigung des Netzausfalls beim Anspinnen mit dem Ziel konzipiert, die Maschine kontrolliert stillzusetzen. Diese Aufgabenstellung und Lösung stellt jedoch eine wesentliche Einschränkung dar.

Auch die DE 36 41 569 C1 geht über diesen Sachverhalt nicht hinaus. Die DE 36 41 569 C1 beinhaltet die Beherrschung eines optimalen Abspinnprogrammes, wobei gegenüber DE 43 47 113 C2 erweiterte Regelmöglichkeiten eingesetzt werden. Beide Lösungen können nicht die Überbrückung des kurzzeitigen Netzausfalls mit technologischer Weiterführung des Spinnprogrammes garantieren.

Es ist Aufgabe der Erfindung, die Antriebseinrichtung einer solchen OE-Spinnmaschine bzw. wenn sie mehrere Antriebseinrichtungen für eine entsprechende Mehrzahl von Spinnstellengruppen mit je einer Vielzahl von Spinnstellen benötigt, die Antriebseinrichtung für jede solche Spinnstellengruppe zu vereinfachen, wobei der kurzzeitige Netzausfall zeitlich umfassender ohne technologische Einschränkung zu beherrschen ist und auch die Umstellung auf unterschiedliche herzustellende Garnnummern und unterschiedliche Garndrehungen wesentlich zu vereinfachen.

Diese Aufgabe wird erfindungsgemäß durch die in Anspruch 1 kennzeichnenden Merkmale gelöst.

Besondere Ausführungen der Erfindung sind in den abhängigen Ansprüchen angegeben.

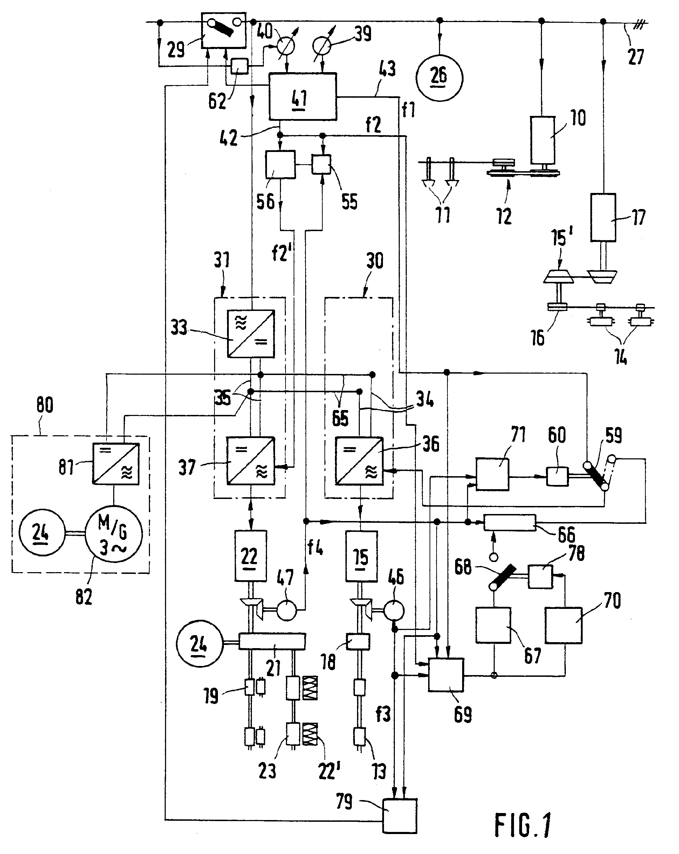

Die Erfindung wird nachfolgend anhand eines Ausführungsbeispieles dargestellt. Dabei zeigt
- Figur 1: Blockschaltbild einer Antriebseinrichtung zum Antrieb der Spinnorgane aller Spinnstellen einer OE-Spinnmaschine,

wobei in schematischer Darstellung auch einige angetriebene Spinnorgane mit angedeutet sind. In dem Ausführungsbeispiel ist angenommen, daß die OE-Spinnmaschine eine Rotorspinnmaschine mit Spinnrotoren 11 ist. Die Spinnrotoren 11 der Spinnstellen werden durch einen gemeinsamen Elektromotor 10 über Riemen und Bandgetriebe 12 angetrieben. Die in Einzelfasern aufzulösenden Faserbänder werden von Speisewalzen 13, Auflösewalzen 14 zugeleitet, die sie in Einzelfasern auflösen. Die Speisewalzen 13 werden über ein mechanisches Getriebe 18 von einem gemeinsamen Synchronmotor 15 angetrieben. Die Auflösewalzen 14 werden über ein stufenlos verstellbares Getriebe 15′ und ein Bandgetriebe 16 von einem gemeinsamen Elektromotor 17 angetrieben. Es kann auch vorgesehen sein, die Auflösewalzen 14 in zwei oder mehr Gruppen zu unterteilen, die von je einem Elektromotor angetrieben werden oder sie auch durch elektrische Einzelmotoren anzutreiben.

Die angetriebenen Abzugswalzen 19 der die Garne aus den Spinnrotoren 11 abziehenden Abzugswalzenpaare sind auf einer oder mehreren Wellen angeordnet, die über ein verstellbares mechanisches Getriebe 21, vorzugsweise ein Zahnradgetriebe von einem elektrischen Asynchronmotor 22 angetrieben werden. Dieser Motor 22 treibt auch die Spulenwalzen 23 über das Getriebe 21 an, welche dem Antrieb der Kreuzspulen 22′ dienen, zu denen die Garne aufgewickelt werden. Auch die Garne zu Kreuzspulen 22′ verlegenden, changierenden Fadenführer können von dem Motor 22 mit angetrieben sein.

Es können ferner noch ein oder mehrere sonstige elektrische Maschinen vorhanden sein, beispielsweise ein Elektromotor 26, der den Antrieb mindestens einer sonstigen anzutreibenden Komponente der OE-Spinnmaschine bzw. der betreffenden Spinnstellengruppe dient, beispielsweise dem Antrieb der Luftfördervorrichtung, die die Luftströmung erzeugt, die durch die Auflösewalzen 14 aufgelösten Fasern in die Spinnrotoren 11 gefördert werden.

Die Motoren 10, 15, 17, 22 und 26 werden mit aus einem Drehstromnetz 27 stammenden Strom versorgt. Die dem Ein- und Ausschalten der Antriebseinrichtung dienende Schaltvorrichtung ist mit 29 bezeichnet.

Die beiden Wechselrichter 36, 37 sind einem gemeinsamen Gleichrichter 33 zugeordnet. Es ist notwendig, mittels der Wechselrichter 36, 37 die Drehzahlen der Elektromotoren 15 und 22 unabhängig voneinander in weiten Grenzen zur Verstellung der Nummern der herzustellenden Garne verstellen zu können, desgleichen die Drehzahl des Elektromotors 22 auch zur Verstellung der Drehung der Garne. Die Einstellung und Verstellung ihrer Drehzahlen erfolgt bei dem Schaltbild der Figur 1 mittels je zwei Sollwertstellern (Sollwertgebern) 39 und 40, mit denen manuell oder durch einen Mikroprozessor die gewünschten Ausgangsfrequenzen der Wechselrichter 36 und 37 eingestellt werden können.

Der Sollwertsteller 39 dient der Einstellung der Ausgangsfrequenz des Wechselrichters 36 und der Sollwertsteller 40 der des Wechselrichters 37.

Aus spinntechnischen Gründen ist es notwendig, daß bei Betriebsdrehzahlen der Spinnmaschine oder ihrer betreffenden Spinnstellengruppe, das die jeweils zu spinnenden Garnnummer bestimmende Verhältnis n2/n1 (Verzugsverhältnis) möglichst genau konstant gehalten wird, wo n1 die Drehzahl der Speisewalzen 13 und n2 die Drehzahl der angetriebenen Abzugswalzen 12 ist. Dagegen wird bei solchen OE-Maschinen nicht verlangt, daß bei Betriebsdrehzahlen die Garndrehung genau konstant gehalten wird, sondern hier werden in gewissem Umfang Schwankungen im Betrieb durchaus zugelassen.

An den beiden Sollwertstellern 39 und 40 werden n1 und n2 eingestellt und in einer Signalerzeugungsvorrichtung 41 eingegeben, die sich beispielsweise in einer Maschinenzentrale befindet und die auf einer Ausgangsleitung 42 ein vorzugsweise gepulstes Ausgangssignal einer Frequenz f2 liefert, welche proportional zu dem am Sollwertsteller 40 eingestellten Sollwert n2 ist und ferner liefert sie auf der Ausgangsleitung 43 ein vorzugsweise gepulstes Ausgangssignal der Frequenz f1, die proportional zu dem am Sollwertsteller 39 eingestellten Sollwert n1 ist.

Jeder der beiden Motoren 15 und 22 treibt je einen Taktgenerator 46, 47 über ein mechanisches Getrieb formschlüssig an, die Ausgangssignale der Frequenzen f3 und f4 liefern, wo f3 proportional zur Drehzahl des Synchronmotors 15 und f4 proportional zur Drehzahl des Asynchronmotors 22 ist. Diese beiden Frequenzen f3 und f4 sind also proportional zu den Istwerten der Drehzahlen dieser beiden Motoren 15 und 22.

Der Motor 22 ist auch hier zweckmäßig ein Asynchronmotor, da er im allgemeinen wesentlich leistungsstärker als der Synchronmotor 15 sein muß, so daß für den Motor 22 die Kosten eines Synchronmotors zumindest in vielen Fällen unwirtschaftlich hoch wären. Sollte dies in machen Fällen jedoch nicht der Fall sein, kann anstelle des Asynchronmotors 22 auch ein Synchronmotor dem Antrieb der Abzugswalzen 19 und der Spulenwalzen 23 wie auch der Schwungmasse 24 dienen.

In dem Ausführungsbeispiel muß jedoch der Motor 22 das Verhalten eines Synchronmotors haben, zu welchem Zweck die Drehzahl des Asynchronmotors 22 mittels eines Drehzahlreglers 55 geregelt wird.

Das auf der Leitung 42 auftretende Signal der Frequenz f2 wird zum einen in einem feinstufigen Frequenzteiler 56 und zum anderen als Drehzahlsollwert in den Regler 55 eingegeben. In diesem Regler 55 wird ferner das von dem Taktgeber 47 erzeugte, zur Drehzahl des Motors 22 proportionale Signal der Frequenz f4 als IstWert der Drehzahl des Motors 22 eingegeben. Der Regler 55 bildet die Regelabweichung f2 minus f4. Wenn diese Regelabweichung größer Null ist, dann ist die Drehzahl des Motors 22 zu niedrig und der Regler 55 verstellt den Teilungsfaktor des Frequenzteilers 56 im Sinne einer Vergrößerung seiner Ausgangsfrequenz f2′. Hierdurch wird die Drehzahl des Motors 22 mittels des mit dem Signal der Frequenz f2′ gesteuerten und damit durch dieses Signal in seiner Ausgangsfrequenz bestimmten Wechselrichters 37 erhöht. Erst wenn die Regelabweichung f2 minus f4 gleich Null ist, verstellt der Regler 55 den Frequenzteiler 56 nicht mehr und der Motor 22 hat dann die Drehzahl n2, die am Sollwertsteller 39 eingestellt ist. Ist die Regelabweichung f2 minus f4 negativ bzw. positiv, dann erhöht bzw. erniedrigt der Regler 55 entsprechend dem Teilungsfaktor des Frequenzteilers bis diese Regelabweichung wieder Null geworden ist. Auf diese Weise wird die Drehzahl des Motors 22 ständig so geregelt, daß sie n2 beträgt oder nur unwesentlich hiervon abweichen kann, wobei jede solche Regelabweichung sofort ausgeregelt wird.

Der Motor 22 treibt über das Getriebe 21 auch eine rotierende Schwungmasse 24 an. Wenn im normalen Betrieb ein kurzzeitiger Netzausfall auftritt, fühlt diesen Netzausfall eine elektronische Stellvorrichtung 62 und verstellt den Sollwertsteller 40 so, daß sein zu der Signalerzeugungsvorrichtung 41 gelieferter Sollwert n2 der Drehzahl des Motors 22 sehr rasch absinkt, was zu einer entsprechend raschen Verringerung der Frequenz f2′ des Steuersignals des Wechselrichtes 37 führt, derart, daß dieser Motor 22 nunmehr in generatorischen Betrieb läuft, wobei jedoch seine Drehzahl infolge der Schwungmasse 24 nur langsam absinken kann.

Der Gleichstromzwischenkreis 35 des Frequenzumrichters 31 ist über eine Leitung 65 mit dem Wechselrichter 36 verbunden. Die bei dem generatorischen Betrieb des Motors 22 in den Gleichstromzwischenkreis 35 zurückgespeiste elektrische Leistung liefert über die Leitung 65 nunmehr die Energie für die Speisung des Synchronmotors 15 mittels des Wechselrichters 36, wobei das vorbestimmte Drehzahlverhältnis n1/n2 sich nicht ändert.

Der Taktgeber 47 liefert sein Ausgangssignal, dessen Frequenz f4 proportional zur Drehzahl des Motors 22 ist, zu einem Frequenzteiler 66, dessen Ausgang über einen durch ein Stellglied 60 betätigbaren Umschalter 59 an den Steuereingang des Wechselrichters 36 angeschlossen ist. Wenn sich dieser Umschalter 59 in seiner gestrichelt dargestellten Schaltstellung befindet, dann bestimmt die Frequenz des Ausgangssignals des Frequenzteilers 66 die Ausgangsfrequenz des vom Wechselrichter 36 zum Motor 15 gelieferten Speisestroms und damit dessen Drehzahl. Wie weiter unten noch erläutert, wird der Frequenzteiler 66 mittels eines Stellgliedes 67 selbsttätig so eingestellt, daß f1/f2 minus f3/f4 gleich Null gilt. Zu diesem Zweck ist ein Rechner 69 vorgesehen, dem als Eingangssignale das auf der Leitung 43 auftretende Signal des Frequenz f1, das auf der Leitung 42 auftretende Signal der Frequenz f2 und die von den Taktgebern 46 und 47 erzeugten Signale mit den Frequenzen f3 und f4 eingegeben werden und dieser Rechner 69 bildet die Regelabweichung f1/f2 minus f3/f4 des Drehzahlverhältnisses der Motoren 15 und 22.

Dieser Rechner 69 schaltet ferner ein Zeitglied 70 immer dann ein, wenn bei eingeschalteter Antriebseinrichtung der Ausgang des Rechners 69 Null ist und sich der Umschalter 59 in der gestrichelten Schaltstellung befindet. Dieses Zeitglied 70 kann dann einen Schalter 68 mittels dessen Stellglied 78 öffnen, um das Stellglied 67 vom Frequenzteiler 66 abzuschalten, so daß dann der Teilungsfaktor des Frequenzteilers 66 nicht mehr verstellt werden kann.

Es sei ferner noch erläutert, daß alle an der Steuerung und Regelung der Speisung der Motoren 15 und 22 und ihres vorbestimmten Drehzahlverhältnisses mitwirkenden elektronischen und elektrischen Komponenten bei Netzausfall von einer Notstrombatterie oder beispielsweise von einem externen Schwungmotor-Generator 80 gespeist werden. Der externe Schwungmotor-Generator 80 besteht aus einem umschaltbaren Motor-Generator 82 mit Wechselrichter 81, wobei eine separate Schwungmasse 24 mechanisch mit der Antriebswelle des Motor-Generators 82 gekoppelt ist. Der Anschlup des Wechselrichters 81 ist an den Gleichstromzwischenkreis 35 realisiert.

Es sei ferner noch erwähnt, daß alle an der Steuerung und Regelung mitwirkenden Signale der Schaltungsanordnung für die Steuerung und Speisung der Motoren 15 und 22 mitwirkenden Signale der Frequenzen f1, f2, f2′, f3, f4 und auch sonstige Steuersignale durch Impulse gebildete Signale sein können.

Um diese Antriebseinrichtung einzuschalten und damit die ihr zugeordneten Spinnstellen auf Betriebsdrehzahlen hochzufahren und anschließend im Dauerbetrieb zu betreiben, wird die Schaltvorrichtung 29 eingeschaltet. Zu diesem Zeitpunkt befindet sich der Umschalter 59 in seiner voll ausgezogenen dargestellten Stellung und der Schalter 68 ist geöffnet. Demzufolge wird der Synchronmotor 15 mit Speisestrom einer Frequenz aus dem Wechselrichter 36 gespeist, die proportional zur Steuerfrequenz f1 ist. Es kann hier auch eine Anfahrautomatik vorgesehen sein, die diese Steuerfrequenz des Wechselrichters in vorbestimmter Weise hochfährt.

Der Asynchronmotor 22 wird mit Speisestrom aus dem Wechselrichter 37 gespeist, dessen Frequenz durch den Regler 55 geregelt wird, so daß dieser Asynchronmotor 22 aus dem Stillstand hochläuft bis seine Drehzahlabweichung vom Drehzahlsollwert Null geworden ist.

Die Umschaltung des Schalters 59 vom Anfahren auf die Dauerbetriebsstellung kann beispielsweise mittels eines Komparators 71 erfolgen, dessen Eingänge an die Taktgeber 46 und 47 angeschlossen sind. Dieser Komparator 71 bewirkt mittels des Stellgliedes 60 das Umschalten des Schalters 59 in seine gestrichelt dargestellte Schaltstellung, wenn das Verhältnis f3/f4 einen vorbestimmten Wert erreicht hat oder von einem vorbestimmten Wert nur noch um einen vorbestimmten Betrag nach oben bzw. nach unten abweicht. Dieser vorbestimmte Wert kann vorzugsweise dem Verhältnis f1/f2 entsprechen. Man kann also gegebenenfalls auch anstelle des Komparators 71 den Rechner 69 für das Umschalten des Umschalters 59 einsetzen, indem man vorsieht, daß der Umschalter 59 von seiner Anfahrstellung auf die Betriebsstellung umgeschalten wird, sobald der Ausgang des Rechners 69 Null geworden ist oder noch um einen vorbestimmten kleinen Betrag nach oben bzw. nach unten von Null abweicht.

Es ist auch möglich die Umschaltung des Umschalters 59 nicht wie beschrieben zustandsabhängig, sondern zeitabhängig vorzusehen. Beispielsweise ein Zeitgleid, daß mit Einschaltung der Schaltvorrichtung 29 mit eingeschaltet wird und nach einer vorbestimmten an ihm eingestellten Zeitspanne, das Umschalten des Schalters 59 von seiner Anfahrstellung in seine gestrichelt dargestellte Betriebsstellung auslöst.

Gleichzeitig mit dem Umschalten des Umschalters 59 in seine Dauerbetriebsstellung wird der Schalter 68 geschlossen und das Ausgangssignal des Frequenzteilers 66 ist nunmehr das Steuersignal, daß die Ausgangsfrequenz des Wechselrichters 36 und damit die Drehzahl des Synchronmotors 15 bestimmt. Der Ausgang des Rechners 69 steuert nun das Stellglied 67 des Frequenzteilers 66 so an, daß der Teilungsfaktor des Frequenzteilers 66 so lange in jeweils der Richtung verstellt wird, daß die mittels des Rechners 69 ermittelte Regelabweichung der Drehzahlverhältnisse f1/f2 minus f3/f4 sich verkleinert und schließlich Null wird. Sobald diese Regelabweichung Null geworden ist, löst der Rechner 69 das Einschalten des Zeitgliedes 70 aus, daß eine vorbestimmte eingestellte Zeitspanne abmißt. Bleibt während dieser Zeitspanne die im Rechner 69 berechnete Regelabweichung Null, dann bewirkt das Zeitglied 70 nach Abmessen dieser Zeitspanne das Öffnen des Schalters 68. Weicht dagegen diese Regelabweichung f1/f2 minus f3/f4 noch während des Abmessens dieser Zeitspanne wieder von Null ab, dann wird das Zeitglied 70 wieder auf Null zurückgestellt und verbleibt in dieser Null-Stellung bis die Regelabweichung erneut Null wird.

Der Schalter 68 wird also nur dann geöffnet, wenn die vom Rechner 69 berechnete Regelabweichung während der vom Zeitglied 70 abgemessenen, vorbestimmten Zeitspanne ständig Null geblieben ist.

Es bleibt nunmehr nach Öffnen des Schalter 68 die mittels des Frequenzteilers 66 eingestellte Drehzahl des Synchronmotors 15 im weiteren konstant. Da die im Rechner 69 ermittelte Regelabweichung Null ist und wegen der Regelung der Drehzahl des Motors 22 auch Null bleibt, entspricht das nunmehr vorliegende und im weiteren Betrieb sich nicht mehr ändernde Verhältnis der Drehzahlen der Motoren 15 und 22 dem an den Sollwertstellern 39, 40 eingestellten Sollwert n1/n2.

Gleichzeitig mit dem Öffnen des Schalters 68 wird eine Überwachungsschaltung 69 eingeschaltet. Die von den Taktgebern 46 und 47 gelieferten Signale der Frequenz f3 und f4 werden in die beiden Eingänge der Überwachungsschaltung 79 eingegeben. Die Überwachungsschaltung 79 bildet das Verhältnis f3/f4. Die Überwachungsschaltung 79 prüft das Frequenzverhältnis f3/f4, ob es dem Solldrehzahlverhältnis f1/f2 und damit dem Verhältnis n1/n2 entspricht. Falls dieses Verhältnis n1/n2 im nun vorliegenden Dauerbetrieb nicht mehr zutrifft, schaltet die Überwachungsschaltung 79 die Antriebseinrichtung ab, d.h. die Schaltvorrichtung 29 öffnet sich.

Auch während eines kurzzeitigen Netzausfalls ändert sich das mittels des Frequenzteilers 66 eingestellte Drehzahlverhältnis der Motoren 15 und 22 nicht, da die Drehzahl des Synchronmotors 15 mittels des Frequenzteilers 66 in an letzteren eingestellten Verhältnis nachgeführt wird, so daß die Garnqualität durch kurzzeitigen Netzausfall nicht beeinträchtigt wird.

## Patentansprüche

1. Antriebseinrichtung für Arbeitsorgane einer OE-Spinnmaschine, welche eine Vielzahl von Spinnstellen mit Speisewalzen und Auflösewalzen aufweist, wobei die Speisewalzen (13) aller Spinnstellen oder einer Gruppe von Spinnstellen durch einen ersten Elektromotor (15) mit dazugehörigem ersten Wechselrichter (36) und die Abzugswalzen (19) dieser Spinnstellen durch einen zweiten Elektromotor (22) mit dazugehörigem zweiten Wechselrichter (37) antreibbar sind und daß die Drehzahl des ersten Motors (15) in Abhägigkeit der von einem Taktgeber (47) ermittelten Drehzahl des zweiten Motors (22) so geführt wird, daß das jeweils eingestellte Drehzahlverhältnis des ersten und zweiten Motors (15, 22) bei Betriebsdrehzahlen konstant bleibt, daß beim Anfahren der Antriebseinrichtung der zweite Motor (22) vom zweiten Wechselrichter (37) mit Speisestrom gespeist wird, dessen Frequenz (f2′) unabhängig von der Drehzahl des ersten Motors (15) ist, dadurch gekennzeichnet, daß während oder nach dem Hochfahren der Antriebseinrichtung auf Betriebsdrehzahlen von einem Steuersignal (f1) für den ersten Wechselrichter (36) des ersten Motors (15) umgeschalten wird auf das von dem Taktgeber (47) des zweiten Motors (22) gelieferte und von einem Frequenzteiler (66) verarbeitete und abgegebene Signal.

2. Antriebseinrichtung nach Anspruch 2, dadurch gekennzeichnet, daß das Umschalten des Umschalters (59) durch einen Komparator (71) mit seinem Stellglied (60) erfolgt, wenn das Verhältnis der Signale mit der Eingangsfrequenz (f3) und (f4) einen vorbestimmten Wert erreicht hat oder von einem vorbestimmten Wert nur noch um einen vorbestimmten Betrag nach oben bzw. nach unten abweicht.

3. Antriebseinrichtung nach Anspruch 2, dadurch gekennzeichnet, daß mit Umschalten mittels Umschalter (59) das Ausgangssignal der Frequenz (f4) in einem dem Taktgeber (47) nachgeschalteten Frequenzteiler (66) so verarbeitet wird, daß die Differenz zwischen dem Sollwert des Drehzahlverhältnisses und dem Istwert des Drehzahlverhältnisses der beiden Motoren (15, 22) zu dem Wert Null wird und daß vorzugsweise danach, oder wenn dieser Wert Null eine vorbestimmte Zeitlänge ununterbrochen im Frequenzteiler (66) vorliegt, die Einstellung des Frequenzteilers (66) dann bei dem anschließenden Weiterlauf der Motoren (15, 22) nicht mehr geändert wird.

4. Vorrichtung nach Anspruch 3, dadurch gekennzeichnet, daß ein Rechner (69) die Differenz aus dem Drehzahlverhältnis der Soll- und Istwerte ermittelt und in Abhängigkeit der ermittelten Differenz über das Stellglied (67) den Frequenzteiler (66) zeitlich so lange verstellt, daß die mittels des Rechners (69) ermittelte Regelabweichung der Drehzahlverhältnisse den Wert Null erreicht und dann der Rechner (69) zugleich das Zeitglied (70) einschaltet, um den Wert Null der eingestellten Regelabweichung nicht zu verändern, wobei dann die erreichte Regelabweichung durch eine Überwachungsschaltung (79) überwacht wird.

5. Vorrichtung nach Anspruch 4, dadurch gekennzeichnet, daß die Überwachungsschaltung (79) die Schaltvorrichtung (29) öffnet, wenn die Regelabweichung vom Wert Null abweicht.

## Claims

1. Drive device for operating members of an open-end spinning machine which has a plurality of spinning points with feed rollers and opening rollers, the feed rollers (13) of all the spinning points or of a group of spinning points being drivable by a first electric motor (15) having an associated first inverter (36) and the draw-off rollers (19) of these spinning points being drivable by a second electric motor (22) with an associated second inverter (37), and in that the speed of the first motor (15) is controlled as a function of the speed of the second motor (22), determined by a clock generator (47), in such a way that the respectively set speed ratio between the first and second motors (15, 22) remains constant at operating speeds, that when the drive device starts,up the second motor (22) is fed from the second inverter (37) with supply current whereof the frequency (f2′) is independent of the speed of the first motor (15), characterized in that during or after the drive device has accelerated to operating speeds switchover is performed by a control signal (f1) for the first inverter (36) of the first motor (15) to the signal which is supplied by the clock generator (47) of the second motor (22) and is emitted and processed by a frequency divider (66).

2. Drive device according to Claim 2, characterized in that the switchover switch (59) is switched over by a comparator (71) by means of its actuator (60) when the ratio of the signals to the input frequency (f3) and (f4) has reached a predetermined value or deviates upwards or downwards from a predetermined value only by a predetermined amount.

3. Drive device according to Claim 2, characterized in that on switchover by means of the switchover switch (59) the output signal of the frequency (f4) is processed in a frequency divider (66) downstream of the clock generator (47) such that the difference between the set point value of the speed ratio and the actual value of the speed ratio of the two motors (15, 22) becomes the value zero, and in that preferably thereafter, or when this value zero has been present in the frequency divider (66) uninterruptedly for a predetermined period, the setting of the frequency divider (66) is not then altered again as the motors (15, 22) subsequently continue to run.

4. Apparatus according to Claim 3, characterized in that a computer (69) determines the difference between the speed ratio of the set point value and actual value and, in dependence on the difference determined, by way of the actuator (67) resets the frequency divider (66) in time until the regulated deviation of the speed ratios, determined by means of the computer (69), reaches the value zero, and then the computer (69) simultaneously switches on the timing element (70) in order not to alter the value zero of the adjusted regulated deviation, the regulated deviation which has been reached then being monitored by a monitoring circuit (79).

5. Apparatus according to Claim 4, characterized in that the monitoring circuit (79) opens the switching apparatus (29) if the regulated deviation deviates from the value zero.

## Revendications

1. Dispositif d'entraînement d'organes de travail d'une machine de filature à fibres libérées, qui présente un grand nombre de postes de filature comportant des cylindres d'alimentation et des cylindres défibreurs, les cylindres d'alimentation (13) de tous les postes de filature ou d'un groupe de postes de filature pouvant être entraînés par un premier moteur électrique (15) comportant un premier onduleur (36) qui lui est associé, et les cylindres délivreurs (19) de ces postes de filature pouvant être entraînés par un second moteur électrique (22) comportant un second onduleur (37) qui lui est associé et la vitesse de rotation du premier moteur (15) étant réglée, en fonction de la vitesse de rotation, déterminée par un générateur (47) de rythme d'impulsions, du second moteur (22) de manière que le rapport chaque fois ajusté entre la vitesse de rotation du premier moteur (15) et celle du second moteur (22) demeure constant lors des vitesse de rotation en fonctionnement de service ; lors du démarrage du dispositif d'entraînement le second moteur (22) est alimenté par un second onduleur (37) en du courant d'alimentation dont la fréquence (f2′) est indépendante de la vitesse de rotation du premier moteur (15), dispositif caractérisé en ce que, pendant ou après l'accélération du dispositif d'entraînement jusqu'à la vitesse de rotation en fonctionnement de service constant, un signal de commande (f1) du premier onduleur (36) modifie la marche du premier moteur (15) pour la faire correspondre à celle du signal fourni par le générateur (47) de rythme d'impulsions pour le second moteur (22), signal traité et délivré par un diviseur (66) de fréquence.

2. Dispositif d'entraînement selon la revendication 2, caractérisé en ce que la modification de marche du commutateur (59) comme modificateur de marche a lieu grâce à un comparateur (71) ayant un organe de réglage (60) agissant lorsque le rapport entre les signaux ayant la fréquence d'entrée (f3) et (f4) a atteint une valeur prédéterminée ou quand ce rapport ne s'écarte encore, vers le haut ou vers le bas, que d'une quantité prédéterminée par rapport à une valeur prédéterminée.

3. Dispositif d'entraînement selon la revendication 2, caractérisé en ce qu'avec la modification, effectuée à l'aide du commutateur (59) modificateur de marche, le signal de sortie, ayant une fréquence (f4), est traité dans un diviseur (66) de fréquence disposé en aval du générateur (47) de rythme d'impulsions de manière que la différence entre la valeur de consigne du rapport entre les vitesses de rotation et la valeur réelle de ce rapport entre la vitesse de rotation du moteur (15) et celle du moteur (22) devienne nulle et en ce qu'avantageusement ensuite ou lorsque cette valeur nulle est demeurée ininterrompue pendant une période de longueur de temps prédéterminée dans le diviseur (66) de fréquence, le réglage du diviseur (66) de fréquence n'est plus modifié pendant la période subséquente de poursuite du fonctionnement des moteurs (15, 22).

4. Dispositif selon la revendication 3, caractérisé en ce qu'un calculateur ou ordinateur (69) détermine, à partir du rapport entre les vitesses de rotation, la différence des valeurs de consigne et de valeur réelle et, en fonction de la différence ainsi déterminée ajuste par l'intermédiaire de l'organe de réglage (67) le diviseur (66) de fréquence jusqu'à ce que l'erreur de réglage, déterminée à l'aide de l'ordinateur (69), des rapports entre les vitesses de rotation atteigne la valeur nulle, puis l'ordinateur (69) fait simultanément fonctionner le relais temporisateur (70) afin de ne pas modifier la valeur nulle obtenue pour l'erreur de réglage, puis l'erreur de réglage ainsi obtenue est surveillée par un circuit (79) de surveillance.

5. Dispositif selon la revendication 4, caractérisé en ce que le circuit (79) de surveillance ouvre le dispositif de mise au point (29), lorsque l'erreur de réglage s'écarte de la valeur nulle.
